# EUROPEAN PATENT SPECIFICATION

(11) **EP 2 216 213 B1**
(45) Date of publication and mention of the grant of the patent: **12.12.2012**
(21) Application number: 10000801.0
(22) Date of filing: 27.01.2010
(51) Int. Cl.: B60R 21/239

(54) **Airbag cover and airbag apparatus**
Airbagabdeckung und Airbagvorrichtung
Couvercle d'airbag et appareil d'airbag

(30) Priority: 06.02.2009 JP 2009026069
(43) Date of publication of application: 11.08.2010
(73) Proprietor: Takata Corporation, Tokyo 107-8508 (JP)
(72) Inventor: Iwazato, Masaru, Tokyo 107-8508 (JP)
(74) Representative: Banzer, Hans-Jörg

(56) References cited:
- EP-A1- 1 464 551
- EP-A1- 1 749 708
- DE-A1- 19 838 815
- JP-A- 2000 177 522
- JP-A- 2006 076 322
- US-A- 4 966 388
- US-A1- 2001 017 460
- US-A1- 2004 130 131
- US-A1- 2006 163 852

## Description

### [Technical Field]

The present invention relates to airbag apparatuses mounted on vehicles such as automobiles, and more specifically, it relates to an airbag apparatus characterized by means for splitting open an airbag cover.

### [Background Art]

Vehicles such as automobiles are typically provided with an airbag apparatus that inflates and deploys an airbag for absorbing an impact exerted on an occupant in the passenger compartment in the event of a collision or abrupt deceleration. Many types of airbag apparatuses have been developed and provided as such an airbag apparatus, which includes a driver side airbag apparatus provided inside a steering wheel, a passenger side airbag apparatus provided inside an instrument panel, a side airbag apparatus provided inside the side of the vehicle or the vehicle seat, a curtain airbag apparatus provided inside the upper part of the door, a knee airbag apparatus provided so as to protect the knee of the occupant, and a pedestrian protective airbag apparatus provided under the hood of the vehicle and the like. These airbag apparatuses typically have an airbag that is normally in a folded state and inflates and deploys in the event of an emergency, an inflator that supplies gas to the airbag, a retainer that houses the airbag, and an airbag cover that normally conceals the airbag and, in the event of an emergency, splits open a door portion thereof for releasing the airbag into the passenger compartment.

The airbag cover is a resin-molded, thin-walled plate-like component having a groove called a tear line formed on the back face thereof. Such a tear line consists of a groove formed to be thin-walled for allowing the airbag to easily split open the airbag cover. A door portion formed by splitting open the airbag cover is rotatably supported by a hinge portion, a portion connecting with the airbag cover, forming a release section through which the airbag is released (see PD 1 and PD 2).

An airbag cover described in PD 1 is configured so as to split open in a substantially H-shape and is also configured in such a manner that, when the door portion is divided into two portions, these door portions rotate upward and downward, respectively. Also, an airbag cover described in PD 2 is configured so as to split open in a substantially mountain shape and is also configured in such a manner that, when the door portion is divided into three portions, these door portions rotate in the upper left direction, in the upper right direction, and in the downward direction, respectively.
PD 1 = Japanese Patent No. 4032544 B2
PD 2 = Japanese Patent No. 3478974 B2

Furthermore, an airbag apparatus according to the preamble of independent claim 1 is known from US 2001/017460 A1.

JP 2006-076322 A discloses an airbag cover with two door portions, both door portions being configured to rotate sideward when the airbag cover splits open the door portions for releasing the airbag.

### [Disclosure of the Invention]

### [Problems to be Solved by the Invention]

An airbag may have an exhaust port called a vent hole formed therein. Such a vent hole has a function of preventing the inside pressure of airbags from rising to an excessively high level or, when an occupant comes into contact with an inflated airbag, mitigating an impact on the occupant by releasing the gas inside of the airbag. The conditions for forming the vent hole, such as the location, size, quantity and the like, are determined by the airbag size, capacity, mounting position, vehicle type and the like. For example, a driver side airbag disclosed in PD 1 and PD 2 may have a vent hole formed in a space created between the upper side portion of the airbag cover and the steering wheel.

However, an airbag cover described in PD 1 and PD 2 described above encounters a problem that rotatable door portions provided at the upper side portion thereof narrow a space formed between the upper side portion and the steering wheel, which restricts the flexibility in design of the vent hole to be formed in an airbag. Such a problem is not limited to driver side airbags, and is a common problem encountered when an attempt is made to form a vent hole around the airbag cover.

Accordingly, the present invention has been achieved in light of the foregoing and an object thereof is to provide an airbag apparatus which can enhance the flexibility in design of a vent hole to be formed in an airbag.

### [Means for Solving the Problems]

According to the present invention, this object is achieved by an airbag apparatus as defined in claim 1. The dependent claims define preferred and advantageous embodiments of the present invention.

The present invention provides an airbag apparatus comprising an airbag that is normally in a folded state and inflates and deploys in the event of an emergency, the airbag having a vent hole that can release gas supplied to an inside thereof, an inflator that supplies gas to the airbag; a retainer that houses the airbag, and an airbag cover that normally conceals the airbag and, in the event of an emergency, splits open a plurality of door portions thereof for releasing the airbag into a passenger compartment, wherein the vent hole of the airbag is disposed along a side surface portion of the airbag cover in a space between an upper side portion of the airbag cover and an annular rim of a steering wheel when the airbag apparatus is disposed in the steering wheel; and each door portion is configured so as not to rotate to the side of the side surface portion and is configured not to rotate beyond a line T passing through the top of the airbag cover, thereby preventing each rotating door portion from blocking the vent hole upon splitting open.

### [Advantages]

The airbag apparatus according to the present invention has door portions that are configured so as not to rotate to the side surface portion where a vent hole is disposed, thereby preventing each rotating door portion from blocking the vent hole even if the airbag inflates and deploys in the event of an emergency. This allows the vent hole to be disposed along the side surface portion of the airbag cover, thereby enhancing the flexibility in design of the vent hole to be formed in the airbag.

The use of double doors as the door portions allows the airbag cover to promptly, smoothly split open, thereby allowing the efficient inflation and deployment of the airbag. Also, causing an ornament such as an emblem or the like to be rotated together with the door portion allows a larger space inside the airbag cover, namely, a larger space for housing the airbag to be secured. Furthermore, placement of the ornament on the third door portion allows the first door portion and second door portion to be promptly, smoothly opened in the same manner as double doors while allowing the ornament to be rotated together with the third door portion. In addition, use of the airbag cover as a driver side airbag cover can provide advantages above more efficiently.

The airbag cover can be split open promptly, smoothly by adjusting the location of a predetermined fracture portion in the wrapping component or the method of folding the airbag, thereby allowing the airbag to be efficiently inflated and deployed.

### [Brief Description of the Drawings]

[Fig. 1] Fig. 1 is a diagram showing an airbag apparatus according to the present invention. Fig. 1(A) is a front view. Fig. 1(B) is a sectional view taken along the line B-B of Fig. 1(A).
[Fig. 2] Fig. 2 is a diagram showing the effect of an airbag apparatus according to the present invention. Fig. 2(A) is a front view of an airbag as inflated and deployed. Fig. 2(B) is a rear view of an airbag as inflated and deployed.
[Fig. 3] Fig. 3 is a sectional view showing an example of modifications to an airbag apparatus according to the present invention. Fig. 3(A) shows a first example of modifications, Fig. 3(B) shows a second example of modifications, and Fig. 3(C) shows a third example of modifications.
[Fig. 4] Fig. 4 is a front view showing an example of modifications to an airbag apparatus according to the present invention. Fig. 4(A) shows a fourth example of modifications, Fig. 4(B) shows a fifth example of modifications, Fig. 4(C) shows a sixth example of modifications, and Fig. 4(D) shows a seventh example of modifications.
[Fig. 5] Fig. 5 is a diagram showing an airbag apparatus according to a second embodiment of the present invention. Fig. 5(A) is a front view. Fig. 5(B) is a front view of an airbag as inflated and deployed. Fig. 5(C) is a rear view of an airbag as inflated and deployed.

### [Best Mode for Carrying Out the Invention]

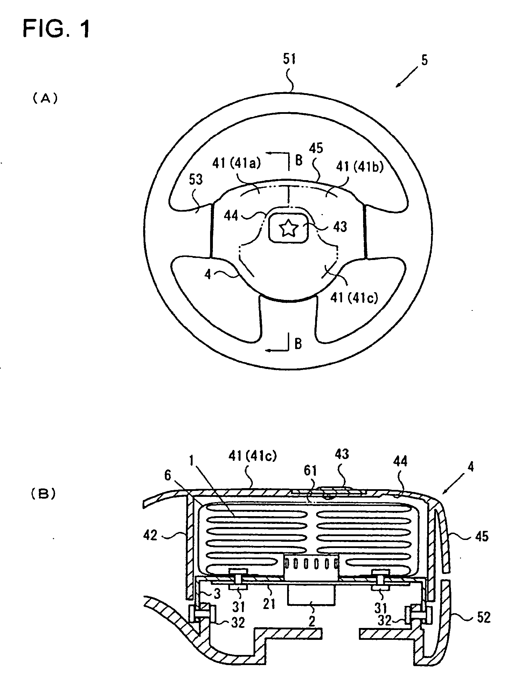

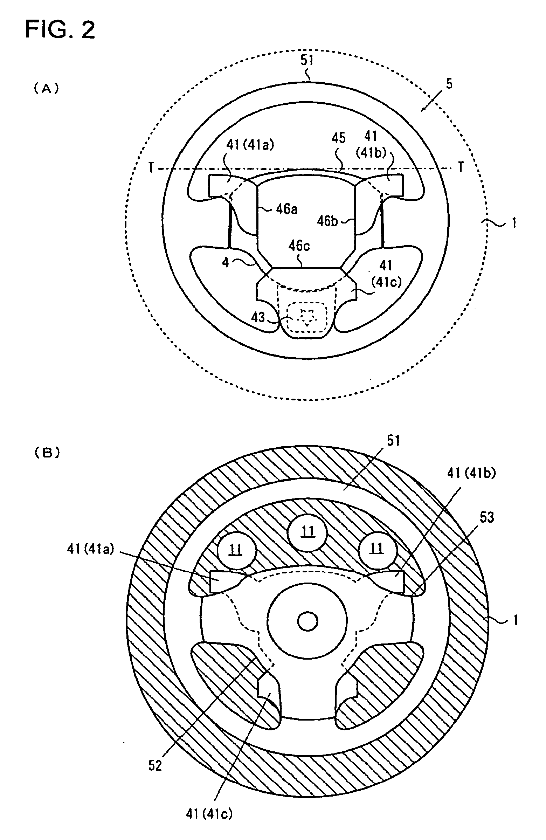

The present invention will be described below using Figs. 1 to 5. Fig. 1 is a diagram showing an airbag apparatus according to the present invention. Fig. 1(A) is a front view. Fig. 1(B) is a sectional view taken along the line B-B of Fig. 1(A). Fig. 2 is a diagram showing the effect of an airbag apparatus according to the present invention. Fig. 2(A) is a front view of an airbag as inflated and deployed. Fig. 2(B) is a rear view of an airbag as inflated and deployed.

An airbag apparatus according to the present invention, shown in Fig. 1 and Fig. 2, has an airbag 1 that is normally in a folded state and inflates and deploys in the event of an emergency, an inflator 2 that supplies gas to the airbag 1, a retainer 3 that houses the airbag 1, and an airbag cover 4 that normally conceals the airbag 1 and, in the event of an emergency, splits open a door portion 41 (a first door portion 41 a, a second door portion 41b, and a third door portion 41c) thereof for releasing the airbag 1 into the passenger compartment, wherein the airbag 1 has a vent hole 11 that can release gas supplied to the inside thereof, and the vent hole 11 is disposed along a side surface portion 45 of the airbag cover 4, and the door portion 41 (the first door portion 4 1 a, the second door portion 41b, and the third door portion 41c) is configured so as not to rotate to the side of the side surface portion 45.

An airbag apparatus shown in Fig. 1 and Fig. 2 is a driver side airbag apparatus, which is disposed in a steering wheel 5. The steering wheel 5 includes an annular rim 51 constituting a handle portion, a hub 52 connected to a steering shaft, and a spoke 53 connecting the rim 51 to the hub 52. The steering wheel having three spokes 53 is shown. Diagrams showing the steering shaft and the steering column are omitted in Fig. 1(B). The airbag cover 4 is connected so as to cover the hub 52, in which the airbag 1, the inflator 2, and the retainer 3 are disposed.

As shown in Fig. 1 (B), the airbag 1 is normally housed in a folded state in a space formed by the retainer 3 and the airbag cover 4. In the figure, the airbag 1 is inwardly folded. The airbag 1 is wrapped with a wrapping component 6 while housed in such a space, and the shape of the airbag 1 in a folded state is retained by the wrapping component 6. The wrapping component 6 has a predetermined fracture portion 61 formed therein, which, in the event of an emergency, fractures for allowing the airbag to be released. The wrapping component 6 may consist of a cloth-like or a strap-like component.

The inflator 2 has a substantially cylindrical outer shape and has gas jetting ports formed at a circumferential side surface of its end contained in the airbag 1. The inflator 2 is fit in an opening formed in the retainer 3 and is secured by a flange portion 21. Also, the inflator 2 is connected to an electronic control unit (ECU) (not illustrated) and is controlled on the basis of measurements obtained by an acceleration sensor or the like. In the event of an emergency in which the ECU detects or predicts a crash or abrupt deceleration of a vehicle, the inflator 2 is ignited by an ignition current from the ECU, causing an agent contained in the inflator 2 to combust and produce gas which is supplied to the airbag 1.

The retainer 3, which retains the airbag 1 and the inflator 2 in an integral manner, is a component for housing the airbag 1 in the airbag cover 4. The retainer 3 has an opening formed substantially in the center thereof, into which the inflator 2 is inserted. The retainer 3 has fasteners 31 such as bolts and nuts disposed thereon, which hold the flange portion 21 of the inflator 2 and the airbag 1 therebetween. Also, the retainer 3 is secured to the hub 52 with fasteners 32 such as bolts and nuts disposed at the leg portion thereof. Although not illustrated, the retainer 3 may be secured by locking a plurality of hooks formed at the outer circumference of the retainer 3 into holes formed at leg portions 42 of the airbag cover 4.

The airbag cover 4, which is disposed in the hub 52, is a component for covering the hub 52 and the airbag 1. More specifically, the airbag cover 4 is formed in a substantially cup-like shape so as to be able to cover the hub 52, and has the leg portion 42 formed so as to stand upright on an inner circumferential surface thereof, the leg portion 42 creating a space for housing the airbag 1. Although not illustrated, when the airbag cover 4 is used as a horn switch, the airbag cover 4 is disposed so as to be slidable on the hub 52. The airbag cover 4 is also a component for constituting a vehicle interior surface and, therefore, is provided on the front face thereof with an ornament 43 such as an emblem.

Furthermore, the airbag cover 4 has a thin-wall tear line 44 formed at the back face thereof in a predetermined shape so as to split open into the door portion 41 (the first door portion 41 a, the second door portion 41b, and the third door portion 41c). As shown in Fig. 1(A), the tear line 44 is formed, for example, in a combined shape of a substantially T shape and a substantially inverted U shape. Accordingly, the door portion 41 consists of the first door portion 41 a and the second door portion 41b which are configured to open in the same manner as double doors along the side surface portion 45 and the third door portion 41c which is configured to be rotatable to the opposite side of the side surface portion 45, wherein the third door portion 41 c has an ornament 43 to be disposed on the surface of the airbag cover 4 provided thereon.

In the event of an emergency (in which the ECU detects or predicts a crash or abrupt deceleration of a vehicle) the airbag apparatus provided with the airbag cover 4 causes the inflator 2 to supply gas to the airbag 1, which then inflates and presses against the rear face of the airbag cover 4. The airbag cover 4 splits open along the tear line 44 since a portion in which the tear line 44 is formed is low in strength, causing the first door portion 41 a, the second door portion 41b, and the third door portion 41 c to rotate about portions where no tear line 44 is formed as hinge portions 46a, 46b, and 46c, respectively, so as to open outward. Accordingly, as shown in Fig. 2(A), the first door portion 41 a and the second door portion 41b open in the same manner as double doors along the side surface portion 45, while the third door portion 41c rotates to the opposite side of the side surface portion 45 together with the ornament 43. In other words, the first door portion 41 a, the second door portion 41 b, and the third door portion 41 c are configured to be not able to rotate to the side of the side surface portion 45, but deploy in a substantially T shape. The first door portion 41 a and the second door portion 41b rotate so as not to go beyond a line T passing through the top of the airbag cover 4. For convenience of description, the airbag 1 is indicated by dotted lines and the illustration of the inflator 2 is omitted in Fig. 2(A).

As shown in Fig. 2(B) depicting a rear view of the airbag 1 as inflated and deployed, the vent hole 11 is disposed along the side surface portion 45 of the airbag cover 4. The vent hole 11 has the function for reducing the inner pressure of the airbag 1 as well as mitigating an impact on an occupant, and the conditions for its location, size, quantity, or the like are determined by the conditions for the shape, capacity, or the like of the airbag 1 to be used. For a driver side airbag apparatus, there is a need to form the vent hole 11 in a space encompassed by the rim 51, the hub 52, and the spoke 53 of the steering wheel 5. Consequently, when the airbag cover 4 splits open to cause the door portion 41 to rotate, the present invention prevents the rotating door portion 41 from blocking the space encompassed by the steering wheel 5. Needless to say, one, two, or four or more vent holes 11 may be formed although three vent holes 11 are formed in Fig. 2(B) which is given just as an example. Also, the present invention can secure a sufficiently wide space in the steering wheel 5 by preventing the door portion 41 from rotating to the side of the side surface portion 45, thereby enhancing the flexibility in design of the vent hole 11 to be formed in an airbag 1. Accordingly, the airbag cover 4 and the airbag apparatus according to the present invention can employ the unit of the same shape or the same configuration, irrespective of the number of the vent holes 11 formed therein, which is excellent in terms of convenience.

Subsequently, an example of modifications to the airbag apparatus according to the present invention is described.

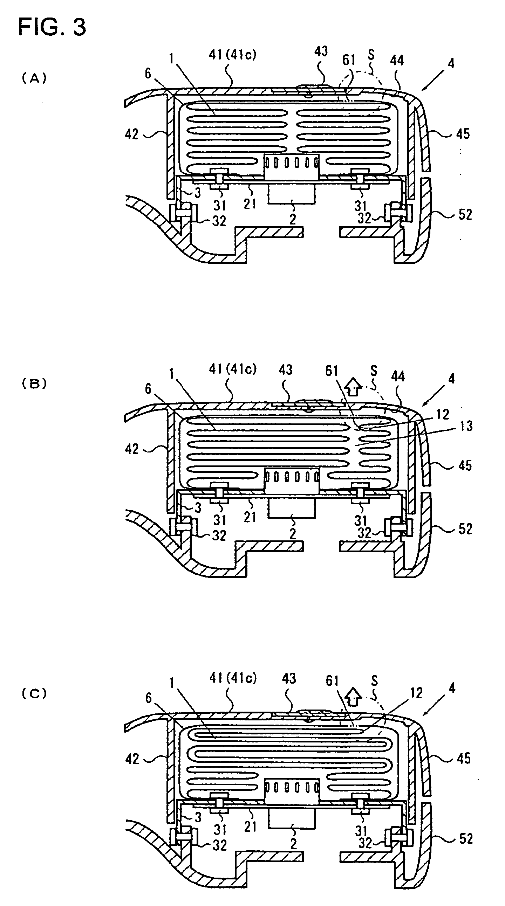

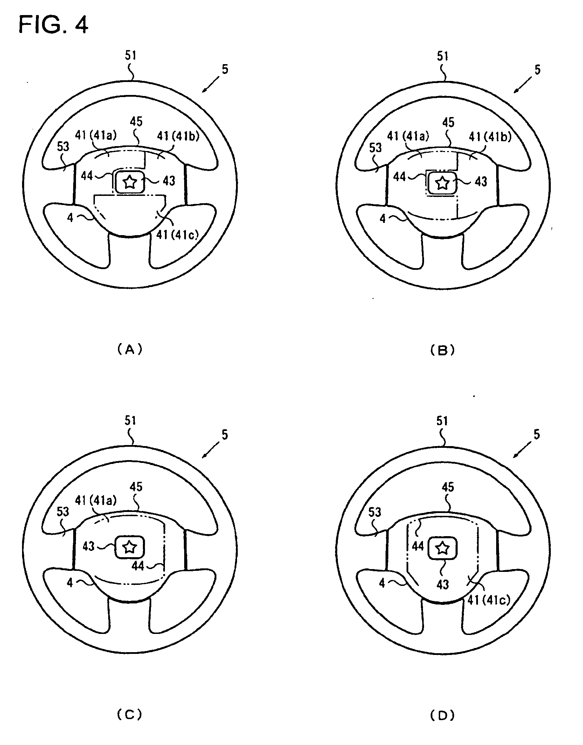

Fig. 3 is a sectional view showing an example of modifications to an airbag apparatus according to the present invention. Fig. 3(A) shows a first example of modifications, Fig. 3(B) shows a second example of modifications, and Fig. 3(C)shows a third example of modifications. Fig. 4 is a front view showing an example of modifications to an airbag apparatus according to the present invention. Fig. 4(A) shows a fourth example of modifications, Fig. 4(B) shows a fifth example of modifications, Fig. 4(C) shows a sixth example of modifications, and Fig. 4(D) shows a seventh example of modifications. The reference numerals and symbols in these figures refer to the same components as those with the same reference numerals and symbols in Fig. 1, and repeated descriptions of the same components are omitted.

The first example of modifications shown in Fig. 3(A) includes the predetermined fracture portion 61 of the wrapping component 6 formed so as to be disposed at a position S close to a portion where the door portion 41 begins to split open. The position S close to a portion where the door portion 41 begins to split open refers to, for example, a portion enclosed by dashed-dotted lines in Fig. 3(A) and, more specifically, a portion close to a contact point (upper portion of the ornament 43) among the first door portion 41a, the second door portion 41b, and the third door portion 41c. Pressing against this portion allows the airbag cover 4 to effectively split open into the first door portion 41 a, the second door portion 41b, and the third door portion 41c. Also, the airbag 1 is enclosed by the wrapping component 6 for retaining the shape thereof, and begins to inflate and deploy when the wrapping component 6 splits open starting at the predetermined fracture point 61. Accordingly, making the predetermined fracture portion 61 coincident with the portion where the door portion 41 begins to split open allows the airbag cover 4 to split open promptly, smoothly, thereby allowing the airbag 1 to effectively inflate and deploy.

In addition to the first example of modifications described above, the second example of modifications shown in Fig. 3(B) includes the airbag 1 folded in such a manner that the end portion 12 of the airbag 1 is disposed at the position S close to a portion where the door portion 41 begins to split open. The end portion 12 of the airbag 1 refers to a portion on which a force pressing against the rear face of the airbag cover 4 at the time of inflation of the airbag 1 tends to initially act. For example, as shown in the second example of modifications, in the case where the airbag 1 is inwardly folded, a portion located immediately above a communicating portion 13 is the end portion 12 of the airbag 1. Disposing the end portion 12 immediately below the position S allows the airbag cover 4 to split open promptly and smoothly, thereby allowing the airbag 1 to effectively inflate and deploy.

The third example of modifications shown in Fig. 3(C) includes the second example of modifications described above with the end of the airbag 1 being accordion-folded. In the case where the airbag 1 is accordion-folded, the end portion 12 of the airbag 1 is a portion on which a force pressing against the rear face of the airbag cover 4 tends to initially act. The way in which the airbag 1 is folded as shown in Figs. 3(B) and 3(C) is given just as an example, and roll folding or a combination of inward folding and accordion folding may be used. Also, inward folding, accordion folding, or roll folding may be followed by vertical folding for reduction of volume.

The fourth example of modifications shown in Fig. 4(A) includes the door portion 41 that consists of the first door portion 41 a, the second door portion 41 b, and the third door portion 41 c, wherein the ornament 43 such as an emblem is disposed on the second door portion 41b. In the fourth example of modifications, the tear line 44 having a substantially T shape has its vertical section formed in the shape of a crank. This arrangement also prevents the door portion 41 from rotating to the side of the side surface portion 45. The ornament 43 may be disposed on the first door portion 41a, instead of the second door portion 41b.

The fifth example of modifications shown in Fig. 4(B) includes the door portion 41 that consists of the first door portion 41a and the second door portion 41b, wherein the ornament 43 is disposed on the second door portion 41b. In the fifth example of modifications, the tear line 44 is formed in a substantially H shape, whose vertical section has a convex portion formed therein. This arrangement also prevents the door portion 41 from rotating to the side of the side surface portion 45. The ornament 43 may be disposed on the first door portion 41 a instead of the second door portion 41b.

The sixth example of modifications shown in Fig. 4(C) includes the door portion 41 which consists of the first door portion 41a only, wherein the ornament 43 is disposed on the first door portion 41 a. In the sixth example, the tear line 44 is formed in a substantially inverted C shape. This arrangement also prevents the door portion 41 from rotating to the side of the side surface portion 45. The door portion 41 may consist of the second door portion 41b only.

The seventh example of modifications shown in Fig. 4(D) includes the door portion 41 which consists of the third door portion 41 c only, wherein the ornament 43 is disposed on the third door portion 41 c. In the seventh example, the tear line 44 is formed in a substantially inverted U shape. This arrangement also prevents the door portion 41 from rotating to the side of the side surface portion 45.

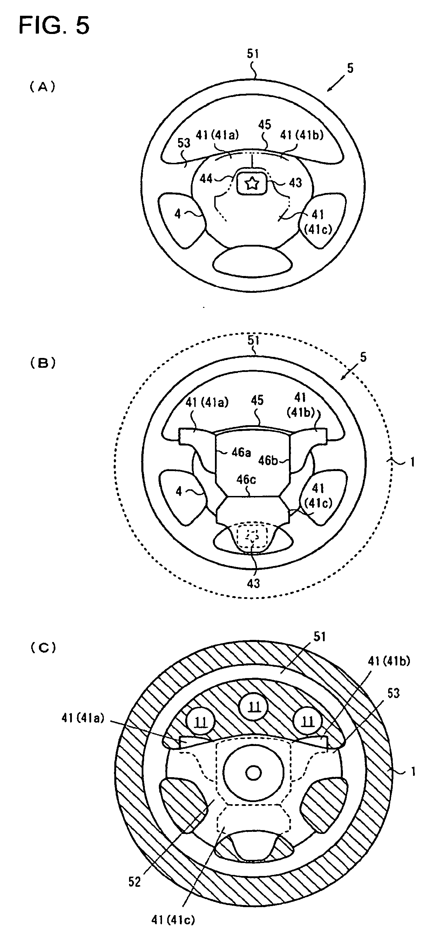

Subsequently, an airbag apparatus according to another embodiment of the present invention is described. Fig. 5 is a diagram showing an airbag apparatus according to the second embodiment of the present invention. Fig. 5(A) is a front view. Fig. 5(B) is a front view of an airbag as inflated and deployed. Fig. 5(C) is a rear view of an airbag as inflated and deployed. The reference numerals and symbols in these figures refer to the same components as those with the same reference numerals and symbols in Fig. 1, and repeated descriptions of the same components are omitted.

In the second embodiment shown in Figs. 5(A) to 5(C), the steering wheel 5 has a different shape. As shown in Fig. 5(A), the steering wheel 5 has four spokes 53. The airbag cover 4 and the airbag apparatus according to the present invention can be easily applied to the steering wheel 5 having such a shape.

Accordingly, as shown in Fig. 5(A), the airbag cover 4 is configured to have the tear line 44 formed at the rear face thereof in a predetermined shape so as to split open into the door portion 41 (the first door portion 41a, the second door portion 41b, and the third door portion 41 c).

In an emergency, the airbag cover 4 splits open along the tear line 44. Then, the first door portion 41 a, the second door portion 41b, and the third door portion 41 c rotate about the hinge portions 46a, 46b, and 46c, respectively, wherein the first door portion 41 a and the second door portion 41b opens in the same manner as double doors along the side surface portion 45, and the third door portion 41 c rotates to the opposite side of the side surface portion 45 together with the ornament 43, as shown in Fig. 5(B).

Accordingly, when the airbag cover 4 splits open, the rotating door portion 41 of the airbag cover 4 is configured so as not to block a space enclosed by the steering wheel 5, thereby securing a sufficiently wide space encompassed by the rim 51, the hub 52, and the spoke 53 of the steering wheel 5 and thereby enhancing the flexibility in design of the vent hole 11 to be formed in an airbag 1. Needless to say, one, two, or four or more vent holes 11 may be formed although three vent holes 11 are formed in Fig. 5(C) which is given just as an example.

## Claims

1. An airbag apparatus disposed in a steering wheel (5) comprising:
an airbag (1) that is normally in a folded state and inflates and deploys in the event of an emergency, the airbag (1) having a vent hole (11) that can release gas supplied to an inside thereof;
an inflator (2) that supplies gas to the airbag (1);
a retainer (3) that houses the airbag (1); and
an airbag cover (4) that normally conceals the airbag (1) and, in the event of an emergency, splits open a plurality of door portions (41a-c) thereof for releasing the airbag (1) into a passenger compartment,
**characterized in that**
the vent hole (11) of the released airbag (1) is disposed along a side surface portion (45) of the airbag cover (4) in a space between an upper side portion of the airbag cover (4) and an annular rim (51) of the steering wheel (5) and
each door portion (41 a-c) is configured so as not to rotate to the side of the side surface portion (45) where the vent hole (11) of the released airbag (1) is disposed, and is configured not to rotate beyond a line T passing through the top of the airbag cover (4), thereby preventing each rotating door portion (41a-c) from blocking the vent hole (11) upon splitting open.

2. The airbag apparatus according to Claim 1, wherein the door portions (41a-c) are configured to open in the same manner as double doors along the side surface portion (45).

3. The airbag apparatus according to Claim 1 or 2, wherein one of the door portions has an ornament (43) to be disposed on the surface of the airbag cover (4), and the ornament (43) rotates together with the one door portion (41a-c).

4. The airbag apparatus according to any one of Claims 1-3, wherein the plurality of door portions (41a-c) consists of a first door portion (41a) and a second door portion (41 b) which are configured to open in the same manner as double doors along the side surface portion (45) and a third door portion (41c) which is configured to be rotatable to the opposite side of the side surface portion (45), wherein the third door portion (41c) has an ornament (43) to be disposed on the surface of the airbag cover (4).

5. The airbag apparatus according to any one of Claims 1-4, wherein the airbag cover (4) is a driver side airbag cover disposed in a hub (52) of the steering wheel (5).

6. The airbag apparatus according to any one of Claims 1-5, wherein the airbag (1) has a wrapping component (6) that normally retains the shape of the airbag (1) and has a predetermined fracture portion (61) formed therein which, in the event of an emergency, fractures for allowing the airbag (1) to be released, and the predetermined fracture portion (61) is disposed in the vicinity of a portion (S) where the door portions (41a-c) begin to split open.

7. The airbag apparatus according to any one of Claims 1-6, wherein the airbag (1) is folded in such a manner that an end (12) of the airbag (1) is disposed in the vicinity of a portion (S) where the door portions (4 1 a-c) begin to split open.

## Patentansprüche

1. Airbagvorrichtung, welche in einem Lenkrad (5) angeordnet ist, umfassend:
einen Airbag (1), der sich normalerweise in einem gefalteten Zustand befindet und in einem Notfall entfaltet und aufgeblasen wird, wobei der Airbag (1) ein Luftloch (11) aufweist, welches Gas, das einem Innenraum des Airbags zugeführt wird, abgeben kann;
eine Aufblaseinrichtung (2), die dem Airbag (1) Gas zuführt;
eine Halterung (3), in der der Airbag (1) untergebracht ist; und
eine Airbagabdeckung (4), die normalerweise den Airbag (1) bedeckt und in einem Notfall mehrere Türabschnitte (41 a-c) davon aufbricht, um den Airbag (1) in einen Fahrgastraum freizugeben,
**dadurch gekennzeichnet,**
**dass** das Luftloch (11) des freigegebenen Airbags (1) entlang eines seitlichen Oberflächenabschnitts (45) der Airbagabdeckung (4) in einem Zwischenraum zwischen einem oberen Seitenabschnitt der Airbagabdeckung (4) und einem ringförmigen Rand (51) des Lenkrads (5) angeordnet ist, und
**dass** jeder Türabschnitt (41 a-c) derart ausgestaltet ist, dass er nicht zu derjenigen Seite des seitlichen Oberflächenabschnitts (45), wo das Luftloch (11) des freigegebenen Airbags (1) angeordnet ist, und nicht über eine T-Linie, welche durch die Oberseite der Airbagabdeckung (4) verläuft, gedreht wird, wodurch jeder sich drehende Türabschnitt (41a-c) daran gehindert wird, beim Aufbrechen das Luftloch (11) zu blockieren.

2. Airbagvorrichtung nach Anspruch 1, wobei die Türabschnitte (41a-c) derart ausgestaltet sind, dass sie sich wie Doppeltüren entlang des seitlichen Oberflächenabschnitts (45) öffnen.

3. Airbagvorrichtung nach Anspruch 1 oder 2, wobei einer der Türabschnitte ein auf der Oberfläche der Airbagabdeckung (4) anzuordnendes Ornament (43) aufweist, und wobei sich das Ornament (43) zusammen mit dem einen Türabschnitt (41a-c) dreht.

4. Airbagvorrichtung nach einem der Ansprüche 1-3, wobei die mehreren Türabschnitte (41a-c) aus einem ersten Türabschnitt (41 a) und einem zweiten Türabschnitt (41 b), welche derart ausgestaltet sind, dass sie sich wie Doppeltüren entlang des seitlichen Oberflächenabschnitts (45) öffnen, und einem dritten Türabschnitt (41 c), welcher ausgestaltet ist, um zu der entgegengesetzten Seite des seitlichen Oberflächenabschnitts (45) gedreht werden zu können, besteht, wobei der dritte Türabschnitt (41 c) ein auf der Oberfläche der Airbagabdeckung (4) anzuordnendes Ornament (43) aufweist.

5. Airbagvorrichtung nach einem der Ansprüche 1-4, wobei die Airbagabdeckung (4) eine fahrerseitige Airbagabdeckung ist, welche in einer Nabe (52) des Lenkrads (5) angeordnet ist.

6. Airbagvorrichtung nach einem der Ansprüche 1-5, wobei der Airbag (1) eine umhüllende Komponente (6) aufweist, die normalerweise die Form des Airbags (1) bewahrt und einen darin ausgebildeten bestimmten Bruchabschnitt (61) aufweist, welcher in einem Notfall bricht, um eine Freigabe des Airbags (1) zu ermöglichen, und wobei der bestimmte Bruchabschnitt (61) in der Nähe eines Abschnitts (S) angeordnet ist, wo die Türabschnitte (41 a-c) aufzubrechen beginnen.

7. Airbagvorrichtung nach einem der Ansprüche 1-6, wobei der Airbag (1) derart gefaltet ist, dass ein Ende (12) des Airbags (1) in der Nähe eines Abschnitts (S), wo die Türabschnitte (41a-c) aufzubrechen beginnen, angeordnet ist.

## Revendications

1. Appareil d'airbag, disposé dans un volant (5), comprenant :
un coussin gonflable (1) qui est normalement à l'état replié et se gonfle et se déploie en cas d'urgence, le coussin gonflable (1) ayant un évent (11) qui peut libérer du gaz alimenté à l'intérieur ;
un système de gonflage (2) qui alimente le gaz au coussin gonflable (1) ;
un dispositif de retenue (3) qui abrite le coussin gonflable (1) ; et
un couvercle de coussin gonflable (4) qui dissimule normalement le coussin gonflable (1) et, en cas d'urgence, sépare en ouverture une pluralité de parties de portes (41a-c) correspondantes, afin de libérer le coussin gonflable (1) dans un compartiment passager,
**caractérisé en ce que**
l'évent (11) du coussin gonflable libéré (1) est disposé le long d'une partie de surface latérale (45) du couvercle de coussin gonflable (4), dans un espace situé entre une partie du côté supérieur du couvercle de coussin gonflable (4) et une bordure annulaire (51) du volant (5) et
chaque partie de porte (41 a-c) est configurée de façon à ne pas tourner vers le côté de la partie de surface latérale (45), dans lequel l'évent (11) du coussin gonflable libéré (1) est disposé et est configurée de façon à ne pas tourner au-delà d'une ligne T, passant à travers le haut du couvercle de coussin gonflable (4), empêchant ainsi chaque partie de porte rotative (41a-c) de bloquer l'orifice de ventilation (11) lors de la séparation en ouverture.

2. Appareil d'airbag, selon la revendication 1, dans lequel les parties de porte (41 a-c) sont configurées de façon à s'ouvrir de la même façon que des doubles portes, le long de la partie de surface latérale (45).

3. Appareil d'airbag selon la revendication 1 ou 2, dans lequel une des parties de porte présente un ornement (43) à disposer sur la surface du couvercle d'airbag (4) et l'ornement (43) tourne avec la partie de porte (41a-c).

4. Appareil d'airbag selon l'une quelconque des revendications 1 à 3, dans lequel la pluralité de parties de portes (41a-c) est constituée d'une première partie de porte (41a) et d'une seconde partie de porte (4 1 b), qui sont configurées pour s'ouvrir de la même façon que des doubles portes, le long de la partie de surface latérale (45) et une troisième partie de porte (41c) qui est configurée pour pouvoir tourner vers le côté opposé de la partie de surface latérale (45), dans lequel la troisième partie de porte (41c) présente un ornement (43) à disposer sur la surface du couvercle de coussin gonflable (4).

5. Appareil d'airbag selon l'une quelconque des revendications 1 à 4, dans lequel le couvercle de coussin gonflable (4) est un couvercle de coussin gonflable côté conducteur, disposé dans un noyau (52) du volant (5).

6. Appareil d'airbag selon l'une quelconque des revendications 1 à 5, dans lequel le coussin gonflable (1) a un composant d'enveloppement (6) qui conserve normalement la forme du coussin gonflable (1) et a une partie de fracture prédéterminée (61) formée à l'intérieur, qui, en cas d'urgence, se rompt pour permettre la libération du coussin gonflable (1), et la partie de fracture prédéterminée (61) est disposée à proximité d'une partie (S), où les parties de porte (41a-c) commencent à se séparer en ouverture.

7. Appareil d'airbag selon l'une quelconque des revendications 1 à 6, dans lequel le coussin gonflable (1) est replié de sorte qu'une extrémité (12) du coussin gonflable (1) soit disposée à proximité d'une partie (S) où les parties de porte (41 a-c) commencent à se séparer en ouverture.
